# EUROPEAN PATENT APPLICATION

(11) **EP 4 664 289 A1**
(43) Date of publication of application: **17.12.2025**
(21) Application number: 25177150.7
(22) Date of filing: 18.05.2025
(51) Int. Cl.: G06F 11/07, G07C 5/08

(54) **AIRPLANE SYSTEM LOG FILE AUTOMATIC PROCESSING AND ALERTING SYSTEM**

(30) Priority: 07.06.2024 US 202418736968
(71) Applicant: The Boeing Company, Arlington, VA 22202 (US)
(72) Inventor: Albuquerque, Daniel Michael, Arlington, 22202 (US); Eames, Patrick Jan, Arlington, 22202 (US); Hadley, Brent Louis, Arlington, 22202 (US); Ciolek, Nathan, Arlington, 22202 (US); Nicacio, Rebecca Katherine, Arlington, 22202 (US); Pennell-Dum, Alison Grahame, Arlington, 22202 (US)
(74) Representative: Arnold & Siedsma

(57) **Abstract**

Systems, apparatuses, and methods provide for looping through a plurality of airplane system alert types. An alert rule associated with individual airplane system alert types is determined, where the alert rule has an alert threshold associated with a category type. An airplane log datastore is scanned for error events associated with the alert rule. The error events are grouped based at least in part on the category type. A determination is made as to whether a group of error events meets the alert threshold. The group of error events is ignored in response to the alert threshold not being met.

## Description

### TECHNICAL FIELD

The present disclosure generally relates to airplane system logs. More particularly, the present disclosure relates to an airplane system log processor to generate alerts based on airplane system logs.

### BACKGROUND

Many airplanes include systems which produce log files, such as Onboard Network System (ONS) logs. These system logs contain operational information about the airplane. Currently, such system logs are typically only accessed in a reactive manner when a problem with the airplane presents itself.

### SUMMARY

Some implementations discussed herein automatically process, store, and generate alerts form airplane log files. As part of processing, system messages are combined via a rule set to generate events which further drives alerts being generated if the event or combination of events is of interest. Event messages are hashed to differentiate alerts, suppress duplicates, and avoid nuisance alerts. While processing, the software configuration and other actionable insights about the airplane are also obtained and stored.

As will be described in greater detail below, in some implementations discussed herein, systems, apparatuses, and (computer-implemented) methods provide for looping through a plurality of airplane system alert types. An alert rule associated with individual airplane system alert types is determined, where the alert rule has an alert threshold associated with a category type. An airplane log datastore is scanned for error events associated with the alert rule. The error events are grouped based at least in part on the category type. A determination is made as to whether a group of error events meets the alert threshold. The group of error events is ignored in response to the alert threshold not being met.

In one aspect, a computing system includes a processor and a memory coupled to the processor. The memory includes a set of instructions, which when executed by the processor, cause the processor to loop through a plurality of airplane system alert types. An alert rule associated with individual airplane system alert types is determined, where the alert rule has an alert threshold associated with a category type. An airplane log datastore is scanned for error events associated with the alert rule. The error events are grouped based at least in part on the category type. A determination is made as to whether a group of error events meets the alert threshold. The group of error events is ignored in response to the alert threshold not being met.

The alert threshold may have an upper alert threshold value and a lower alert threshold value.

The category type may be one or more of occurrences per flight or occurrences per time period.

The instructions, when executed, may further cause the processor to: create a hash value of the group of events in response to the alert threshold being met; determine if the hash value matches a previous hash value of a previous event that already exists in the airplane log datastore; and ignore the group of error events in response to the hash value matching the previous hash value.

The instructions, when executed, may further cause the processor to: create a hash value of the group of events in response to the alert threshold being met; determine if the hash value matches a previous hash value of a previous event that already exists in the airplane log datastore; send an alert to an end user in response to the hash value not matching the previous hash value; and store the hash value in the airplane log datastore in response to the hash value not matching the previous hash value.

The instructions, when executed, may further cause the processor to: download airplane log file associated with an individual airplane; determine airplane configuration associated the individual airplane; establish a dictionary lookup rule based on the airplane configuration, wherein the dictionary lookup rule identifies operational error types; determine whether the error events have occurred in the airplane log file based on the dictionary lookup rule; extract error data from the airplane log file based on the error events; determine whether a portion of the error events exceed a time threshold based on the error data; remove the portion of the error events that exceed the time threshold; and export the portion of the error events that do not exceed the time threshold. The error data may be one or more of time of error, time of error event, type of error event, system involved in the error event, flight number, specific airplane, location of airplane at time of error, airplane hardware configuration, airplane software configuration, plane number, or plane configuration.

In another aspect, at least one computer readable storage medium includes a set of instructions, which when executed by a computing system, cause the computing system to loop through a plurality of airplane system alert types. An alert rule associated with individual airplane system alert types is determined, where the alert rule has an alert threshold associated with a category type. An airplane log datastore is scanned for error events associated with the alert rule. The error events are grouped based at least in part on the category type. A determination is made as to whether a group of error events meets the alert threshold. The group of error events is ignored in response to the alert threshold not being met.

The alert threshold may have an upper alert threshold value and a lower alert threshold value.

The category type may be one or more of occurrences per flight or occurrences per time period.

The instructions, when executed, may further cause the computing system to: create a hash value of the group of events in response to the alert threshold being met; determine if the hash value matches a previous hash value of a previous event that already exists in the airplane log datastore; and ignore the group of error events in response to the hash value matching the previous hash value.

The instructions, when executed, may further cause the computing system to: create a hash value of the group of events in response to the alert threshold being met; determine if the hash value matches a previous hash value of a previous event that already exists in the airplane log datastore; send an alert to an end user in response to the hash value not matching the previous hash value; and store the hash value in the airplane log datastore in response to the hash value not matching the previous hash value.

The instructions, when executed, may further cause the computing system to: download airplane log file associated with an individual airplane; determine airplane configuration associated the individual airplane; establish a dictionary lookup rule based on the airplane configuration, wherein the dictionary lookup rule identifies operational error types; determine whether the error events have occurred in the airplane log file based on the dictionary lookup rule; extract error data from the airplane log file based on the error events; determine whether a portion of the error events exceed a time threshold based on the error data; remove the portion of the error events that exceed the time threshold; and export the portion of the error events that do not exceed the time threshold.

The error data may be one or more of time of error, time of error event, type of error event, system involved in the error event, flight number, specific airplane, location of airplane at time of error, airplane hardware configuration, airplane software configuration, plane number, or plane configuration.

In yet another aspect, a method, such as a computer-implemented method, includes looping through a plurality of airplane system alert types. An alert rule associated with individual airplane system alert types is determined, where the alert rule has an alert threshold associated with a category type. An airplane log datastore is scanned for error events associated with the alert rule. The error events are grouped based at least in part on the category type. A determination is made as to whether a group of error events meets the alert threshold. The group of error events is ignored in response to the alert threshold not being met.

The alert threshold may have an upper alert threshold value and a lower alert threshold value.

The category type may be one or more of occurrences per flight or occurrences per time period.

The method may further comprise: creating a hash value of the group of events in response to the alert threshold being met; determining if the hash value matches a previous hash value of a previous event that already exists in the airplane log datastore; and ignoring the group of error events in response to the hash value matching the previous hash value.

The method may further comprise: creating a hash value of the group of events in response to the alert threshold being met; determining if the hash value matches a previous hash value of a previous event that already exists in the airplane log datastore; sending an alert to an end user in response to the hash value not matching the previous hash value; and storing the hash value in the airplane log datastore in response to the hash value not matching the previous hash value.

The method may further comprise: downloading airplane log file associated with an individual airplane; determining airplane configuration associated the individual airplane; establishing a dictionary lookup rule based on the airplane configuration, wherein the dictionary lookup rule identifies operational error types; determining whether the error events have occurred in the airplane log file based on the dictionary lookup rule; extracting error data from the airplane log file based on the error events; determining whether a portion of the error events exceed a time threshold based on the error data; removing the portion of the error events that exceed the time threshold; and exporting the portion of the error events that do not exceed the time threshold.

This Summary is provided to introduce a selection of concepts in a simplified form that are further described below in the Detailed Description. The foregoing Summary, as well as the following Detailed Description of certain implementations, will be better understood when read in conjunction with the appended drawings. This Summary is not intended to identify key features or essential features of the claimed subject matter, nor is it intended to be used as an aid in determining the scope of the claimed subject matter.

### BRIEF DESCRIPTION OF THE DRAWINGS

Various examples will be described below by referencing the following drawings, in which:
FIG. 1 is a schematic view illustrating an airplane system log processing architecture according to an example;
FIG. 2 is a schematic view illustrating another example of the airplane system log processing architecture according to an example;
FIG. 3 is an illustration of a flowchart of an example method for airplane system log processing according to an example;
FIG. 4 is an illustration of a flowchart of a further example method for airplane system log processing according to an example;
FIG. 5 is a block diagram illustrating a computer program product according to an example;
FIG. 6 is a block diagram illustrating an example fluid delivery apparatus according to an example; and
FIG. 7 is a block diagram illustrating a hardware apparatus including a semiconductor package according to an example.

### DETAILED DESCRIPTION

As described above, some implementations discussed herein automatically process, store, and generate alerts form airplane log files. As part of processing, system messages are combined via a rule set to generate events which further drives alerts being generated if the event or combination of events is of interest. Event messages are hashed to differentiate alerts, suppress duplicates, and avoid nuisance alerts. While processing, the software configuration and other actionable insights about the airplane are also obtained and stored.

Some implementations discussed herein provide automation of end to end flow of data that identifies alerts across multiple flights and time ranges and captures the latest software configuration of actual software parts on the airplane. The type of data input in the implementations discussed herein is not currently used by existing alerting tools. For example, some implementations discussed herein utilize non-conventional data that includes connection failure between various components. Such connection failure between various components may include the Digital Flight Data Acquisition Unit (DFDAU) not communicating with the Network File Server (NFS), for example. Another example is when files are queue for moving offboard the aircraft and are rejected.

Advantageously, some implementations discussed herein provide automated data access and data down link from an airplane for automation of end to end flow of data. In some examples, alerting rule are set to generate alerts and avoid nuisance alerts. In some implementations, hashing of event messages is utilized to differentiate alerts, suppress duplicates and avoid nuisance alerts. In some examples, alerts are stored across multiple flights and time ranges, which allows for more complex extraction of alerts. In some implementations, the latest software configuration of actual software parts on the airplane is captured. Accordingly, the airplane operator can be made aware and alerted of issues and events of interest that occur on the airplane.

The technology described herein therefore enables improved efficiency of an airplane system log processor through several features. As discussed above, alerting rule are set to generate alerts and avoid nuisance alerts based on an alert threshold. Further, hashing of event messages is utilized to differentiate alerts, suppress duplicates and avoid nuisance alerts. Additionally, a time threshold is utilized to remove stale error events. Due to the reduction of the generation and storage of nuisance alerts and stale error events, the airplane system log processor is provided with improved efficiency by freeing up processing resources and additional storage capacity. Specifically, for the airplane system log processor, the added capability to store data in a datastore and the added capability to perform alert generation is an advantageous improvement to system operation efficiency.

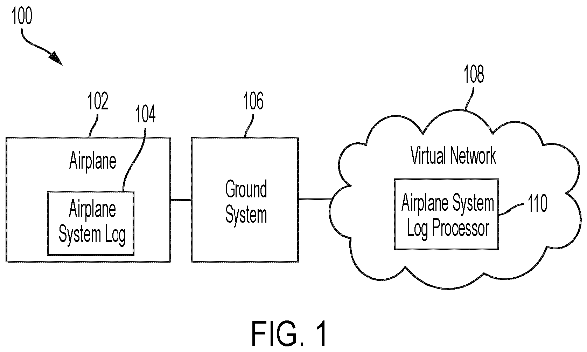

FIG. 1 is a schematic view illustrating an airplane system log processing architecture 100 according to an example. In the illustrated example, the airplane system log processing architecture 100 communicates with an airplane system log 104 of an airplane 102 via a ground system 106. Such a ground system 106 may be a Bifrost system or the like.

The airplane 102 (e.g., a 737 MAX or another model) includes a correctly loaded software configuration that enables the automatic offboarding of the Network File System (NFS) Log files. The NFS System Log file is a specific log file from an avionics Line Replacement Unit (LRU) which contains operational data. Note, data which is not included in System Log files are pilot or aircraft performance related. A log file is generated across multiple flights and automatically offboarded when ground connectivity is established.

The log file is sent from the airplane directly to the ground system 106 implementation for receiving files from customer airplanes (e.g., Bifrost).

For example, airplane 102 utilizes a Message Exchange Function User Modifiable Software (MEF UMS) to direct communication with the ground system 106. The airplane system log 104 is implemented as an Onboard Network System (ONS) log in some implementations.

The ground system 106 communicates with an airplane system log processor 110 implemented via a virtual network 108. Virtual network 108 is implemented via a cloud computing environment or the like, in some examples.

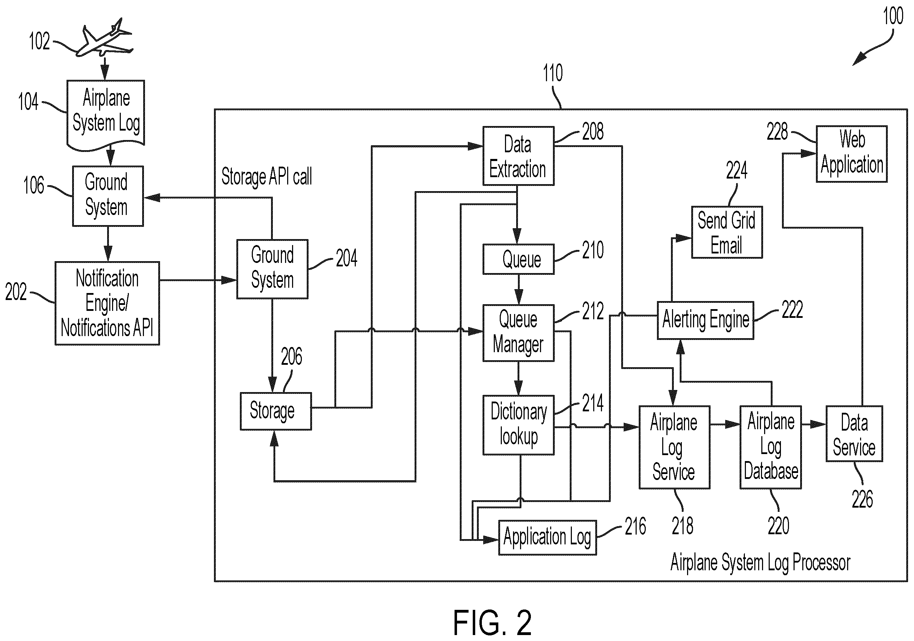

Additional details regarding implementations utilizing the airplane system log processor 110 are found below with respect to FIG. 2.

FIG. 2 is a schematic view illustrating another example of the airplane system log processing architecture 100 according to an example. As illustrated, the ground system 106 has a built in notification engine 202 which informs the virtual network 108 that a log file has been received from a customer airplane.

In some implementations, a ground system connector 204 receives notifications from the ground system 106 via the notification engine 202.

In some examples, the ground system connector 204 requests the offboarded file to be copied into a storage 206. For example, the storage 206 may store a system log file (e.g., via virtual network storage) in order to perform operations on the file. All log files are stored in this storage 206 space, and various services interface with it. In some implementations Managed File Transfer Service (MFTS) for Secure Data Transfer (SDT) are utilized with storage 206 for secure data exchange.

The system log file is contained inside a software packaged "crate", and the data extraction 208 of the log file from the crate occurs in order to begin parsing the log file.

In some implementations, the system implementation assumes a large flying fleet, with many inbound log files at any given time. In such an implementation, queue management via a queue 210 and queue manager 212 ensures stable system loading.

In some examples, a dictionary lookup service 214 contains various scripts to examine an individual log file and determine operational failure modes.

In some implementations, an application log 216 operates as an application log of the airplane system log processor 110 (e.g., not airplane logs under review), to capture system health.

In some examples, when failure modes are identified in a log file during parsing, these failure modes are stored to an airplane log datastore 220 via an application log service 218. In some examples, the airplane log datastore 220 includes files, database storage mechanisms, the like, and/or combinations thereof. These failure modes capture which airplane displayed a failure mode, the corresponding date and time, flight pattern, and other miscellaneous operational statistics (e.g., flight number, destination airports, departure airports, etc.). Events that are captured are stored based on airplane identity, log file, and time. Additionally, the airplane's configuration is also stored.

In some implementations, an alerting engine 222 will review any added failure modes to the database. For example, alerting engine 222 will generate alerts based on correlated faults via operational guidelines (e.g., the combining of multiple faults to one email per tail, per customer, in a defined period, etc.), to build recommended actions which are provided to the customer via a populated email template via a notification service 224 (e.g., SendGrid Email or the like). For example, operational guidelines are provided to the customer via a populated email template, which is sent to the customer automatically or as requested.

In some examples, a data service 226 and corresponding web application 228 enable the ability to review statistics of faults and alerts, as well as to capture rates and metrics associated with a log analysis.

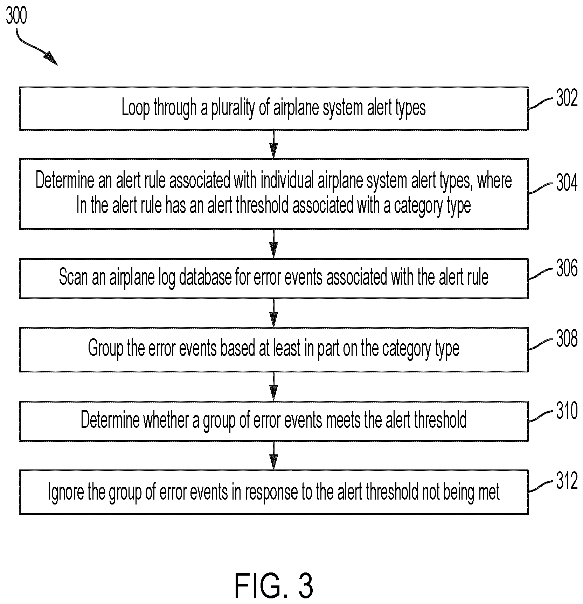

FIG. 3 is a flowchart of an example of another method 300 for airplane system log processing according to an example. The method 300 may generally be implemented in an apparatus, such as, for example, the airplane system log processor 110 (FIG. 1) and/or the airplane system log processor 110 (FIG. 2), already discussed.

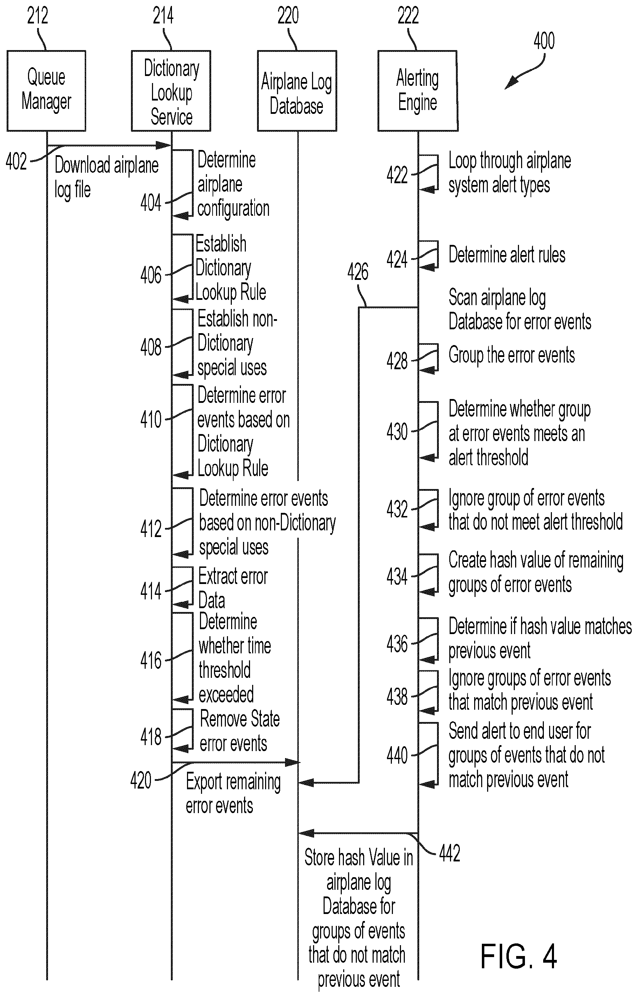

In an example, the method 300 (as well as method 400 (FIG. 4)) can be implemented in computer readable instructions (e.g., software), configurable computer readable instructions (e.g., firmware), fixed-functionality computer readable instructions (e.g., hardware), etc., or any combination thereof.

In some examples, it will be appreciated that some or all of the operations in the method 300 (as well as method 400 (FIG. 4)) can be performed at least in part by cloud processing.

It will be appreciated that some or all of the operations the method 300 (as well as method 400 (FIG. 4)) are described using a "pull" architecture (e.g., polling for new information followed by a corresponding response) can instead be implemented using a "push" architecture (e.g., sending such information when there is new information to report), and *vice versa.*

Illustrated processing block 302 provides for looping through a plurality of airplane system alert types. In some examples, the alert types include Aircraft Wireless LAN Unit (AWLU) connect to cell tower, Digital Flight Data Acquisition Unit (DFDAU) starts communicating, DFDAU stops communicating, Session Control Service (SCS ) Failure (e.g., where the SCS facilitates communication between the engine and NFS), the like, and/or combinations thereof.

Illustrated processing block 304 provides for determining an alert rule associated with individual airplane system alert types. For example, the alert rule has an alert threshold associated with a category type. In some examples, one category of alerts is the Aircraft Communications Addressing and Reporting System (ACARS) alerts (e.g., ACARS Message Delivered). If the aircraft is not configured for ACARS, then this alert is not relevant. Another example is the alert for Backup and Restore Service User Modifiable Software (BARS UMS) Present. If the aircraft is not configured for BARS this alert is not relevant. Often the log file does not tell us this configuration and it is gathered from external sources.

In some implementations the alert threshold has an upper alert threshold value and/or a lower alert threshold value.

In some examples, the category type includes occurrences per flight and/or occurrences per time period. In one example, an alert threshold is of greater than or equal to 100 occurrences in one day of the Aircraft Communications Addressing and Reporting System (ACARS) alerts, then the Network File Server (NFS) may be having more communication issues and connectivity needs to be confirmed for this aircraft. In another example, the alert threshold is a Secure Digital (SD) card alert occurring greater than or equal to 3 occurrences a day, which indicates that The SD card has failed for certain and needs to be replaced.

Illustrated processing block 306 provides for scanning an airplane log datastore. For example, the airplane log datastore is scanned for error events associated with the alert rule. In such an example, an error event is determined to have occurred when the alert rule is met.

Illustrated processing block 308 provides for grouping the error events based at least in part on the category type.

Illustrated processing block 310 provides for determining whether a group of error events meets the alert threshold.

For example, a determination is made as to whether the number of events in the group of events meets the alert threshold. In some implementations, the alert threshold may measure a number of events, a number of events within a given time period, a number of events within a given flight, or the like.

Illustrated processing block 312 provides for ignoring the group of error events in response to the alert threshold not being met.

In one example, a session control service (SCS) must power on and/or initialize when the network file server (NFS) boots up. The SCS allows the electric engine controllers (EECs) to talk to the NFS, so if SCS doesn't start up, the EEC is unable to write files to the NFS. If these don't happen then the reports about the engine performance can't be written and saved. One alert rule for the "SCS Start Up" event is NFS is powered on but SCS doesn't start/initialize, meaning NFS won't talk to EECs and will be missing data and reports. An example threshold may be set (e.g., to five times per NFS powering on) for such occurrences. Therefore, a rule is implemented to look for this "SCS Start Up" between NFS being power on. If that threshold is met then this alert fires.

Another example is around the DFADU (e.g., the DFADU is a close cousin to the "black box"), which is critical to safety monitoring of the aircraft. The DFADU must also communicate with the NFS. This communication is generally tied to intended behavior, but sometimes the DFADU connects, disconnects, and reconnects repeatedly. This can be indicative of failure. An example alerting rule is that this should be occurring somewhat regularly, however, if it is in excess of a threshold (e.g., one hundred time in a flight or a thousand times in a log file) that means there is a failure. This example demonstrates the thresholds (e.g., of one hundred times and a thousand times across multiple cases) being applied across a flight or a single log file (e.g., which can contain multiple flights). If this threshold is met this alert fires.

Additional and/or alternative operations for method 300 are described in greater detail below in the description of FIG. 4.

FIG. 4 is a flowchart of an example of another method 400 for airplane system log processing according to an example. The method 400 may generally be implemented in an apparatus, such as, for example, the airplane system log processor 110 (FIG. 1) and/or the airplane system log processor 110 (FIG. 2), already discussed.

Illustrated processing block 402 provides for downloading airplane log files. For example, the dictionary lookup service 214 downloads the airplane log files from the queue manager 212 in some implementations.

Illustrated processing block 404 provides for determining an airplane configuration associated the individual airplane. For example, an airplane configuration will vary depending on airplane model (e.g., a Boeing model 777 airplane configuration will differ from an airplane configuration for a Boeing model 737). Similarly, such an airplane configuration may include a software version indicating which version of Onboard Network System (ONS) software is being utilized by the airplane. Likewise, such an airplane configuration may include an indication of whether satellite communication or cellular communication is being utilized by the airplane.

Illustrated processing block 406 provides for establishing a dictionary lookup rule based on the airplane configuration. For example, the dictionary lookup rule identifies operational error types that create issues when they occur in excess. For example, the determination of whether one or more error events have occurred in the airplane log file based on the dictionary lookup rule is a linear search through the airplane log file. In some examples, such operational error types may include excessive occurrences of session control service (SCS) being started, the Onboard Authentication Service (OAS) generating client credentials for Electronic Engine Controller - 1A (EEC-1A), the OAS generating client credentials for Network Extension Device 0 (NED0), the like, and/or combinations thereof.

Illustrated processing block 408 provides for establishing a non-dictionary lookup rule based on the airplane configuration. In some examples, the non-dictionary lookup rule is used to deal with special cases that do not fall under the dictionary lookup rules. For example, the determination of whether one or more error events have occurred in the airplane log file based on the non-dictionary lookup rule is a non-linear search through the airplane log file. For example, such special cases may include a rejected Message Exchange Function (MEF) Message-Status over a threshold, an Airplane Data Recorder (ADR) Total Space amount below a threshold, the like, and/or combinations thereof.

One example of a special case rule is in a "Rejected Onboard Boeing Electronic Distribution of Software (OBEDS) Downlink" event. This is triggered by finding the text "MEF-Message-Status": "rejected" in the log file. This is a serious issue that means a file tried to downlink to OBEDS (the communication off board the airplane) and was rejected. This means than files are not being downloaded from the airplane. For the alerting threshold (e.g., a rule that if this occurs greater than 10 times per day) is indicative of a connectivity issue that is causing a lack of airplane data being able to downlink. These special rules are considered different than the dictionary rules because of how they are found by searching for text snippets as opposed to matching a whole line of text for the dictionary rules.

Illustrated processing block 410 provides for determining whether one or more error events have occurred in the airplane log file based on the dictionary lookup rule.

Illustrated processing block 412 provides for determining whether one or more error events have occurred in the airplane log file based on the non-dictionary lookup rule.

Illustrated processing block 414 provides for extracting error data from the airplane log file based on the determined error events. In some implementations, the error data includes time of error event, type of error event, system involved in the error event, flight number, specific airplane, location of airplane at time of error, airplane hardware configuration, airplane software configuration, the like, and/or combinations thereof based on the determined error events. For example, error data from the airplane log file for a given error event is packaged together for storage and later processing.

Illustrated processing block 416 provides for determining whether a portion of the determined error events exceed a time threshold based on the error data.

Illustrated processing block 418 provides for removing the portion of the error events that exceed the time threshold. For example, such operations remove stale error events from further processing.

Illustrated processing block 420 provides for exporting the portion of the error events that do not exceed the time threshold.

Illustrated processing block 422 provides for looping through a plurality of airplane system alert types.

Illustrated processing block 424 provides for determining an alert rule associated with individual airplane system alert types. For example, the alert rule has an alert threshold associated with a category type.

Illustrated processing block 426 provides for scanning an airplane log datastore. For example, the airplane log datastore is scanned for error events associated with the alert rule. In such an example, an error event is determined to have occurred when the alert rule is met.

Illustrated processing block 428 provides for grouping the error events based at least in part on the category type.

Illustrated processing block 430 provides for determining whether a group of error events meets the alert threshold.

For example, a determination is made as to whether the number of events in the group of events meets the alert threshold. In some implementations, the alert threshold may measure a number of events, a number of events within a given time period, a number of events within a given flight, or the like.

Illustrated processing block 432 provides for ignoring the group of error events in response to the alert threshold not being met. For example, such operations remove such error events from further processing.

Illustrated processing block 434 provides for creating a hash value of the group of events in response to the alert threshold being met.

Illustrated processing block 436 provides for determining if the hash value matches a previous hash value of a previous event that already exists in the airplane log datastore.

Illustrated processing block 438 provides for ignoring the group of error events in response to the hash value matching the previous hash value. For example, such operations remove duplicate error events from further processing.

Illustrated processing block 440 provides for sending an alert to an end user for groups of events that don't match a previous event. For example, such an alert is sent in response to the hash value not matching the previous hash value.

Illustrated processing block 442 provides for storing the hash value in the airplane log datastore 220 for groups of events that do not match previous events. For example, the hash value is stored in the airplane log datastore 220 in response to the hash value not matching the previous hash value.

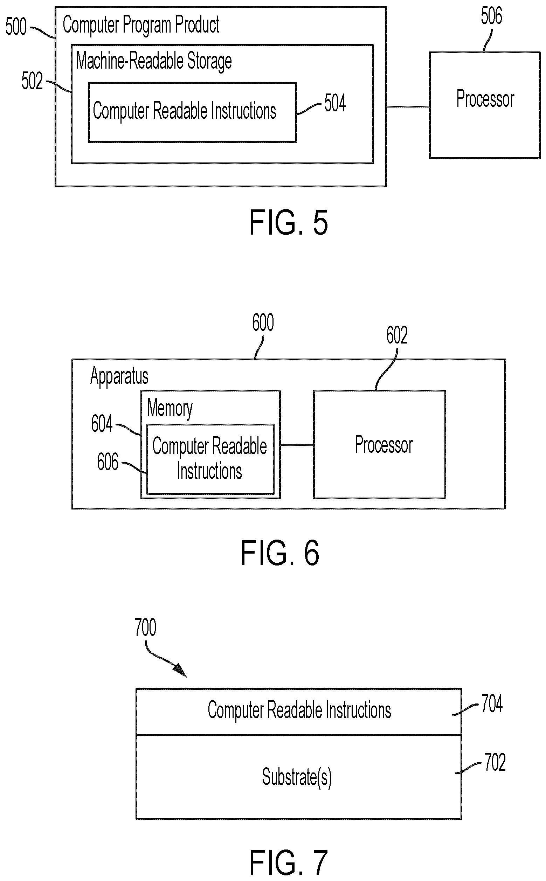

FIG. 5 illustrates a block diagram of an example computer program product 500. In some examples, as shown in FIG. 5, computer program product 500 includes a machine-readable storage 502 that can also include computer readable instructions 504. In some implementations, the machine-readable storage 502 can be implemented as a non-transitory machine-readable storage. In some implementations the computer readable instructions 504, which can be implemented as software, for example. In an example, the computer readable instructions 504, when executed by a processor 506, implement one or more aspects of the method 300 (FIG. 3) and/or the method 400 (FIG. 4), already discussed.

FIG. 6 shows an illustrative example of an apparatus 600. In the illustrated example, the apparatus 600 can include a processor 602 and a memory 604 communicatively coupled to the processor 602. The memory 604 can include computer readable instructions 606, which can be implemented as software, for example. In an example, the computer readable instructions 606, when executed by the processor 602, implement one or more aspects of the method 300 (FIG. 3) and/or the method 400 (FIG. 4), already discussed.

In some implementations, the processor 602 can include a general purpose controller, a special purpose controller, a storage controller, a storage manager, a memory controller, a micro-controller, a general purpose processor, a special purpose processor, a central processor unit (CPU), the like, and/or combinations thereof.

Further, implementations can include distributed processing, component/object distributed processing, parallel processing, the like, and/or combinations thereof. For example, virtual computer system processing can implement one or more of the methods or functionalities as described herein, and the processor 602 described herein can be used to support such virtual processing.

In some examples, the memory 604 is an example of a computer-readable storage medium. For example, memory 604 can be any memory which is accessible to the processor 602, including, but not limited to RAM memory, registers, and register files, the like, and/or combinations thereof. References to "computer memory" or "memory" should be interpreted as possibly being multiple memories. The memory can for instance be multiple memories within the same computer system. The memory can also be multiple memories distributed amongst multiple computer systems or computing devices.

FIG. 7 shows an illustrative semiconductor apparatus 700 (e.g., chip and/or package). The illustrated apparatus 700 includes one or more substrates 702 (e.g., silicon, sapphire, or gallium arsenide) and computer readable instructions 704 (such as, configurable computer readable instructions (e.g., firmware) and/or fixed-functionality computer readable instructions (e.g., hardware)) coupled to the substrate(s) 702. In an example, the computer readable instructions 704 implement one or more aspects of the method 300 (FIG. 3) and/or the method 400 (FIG. 4), already discussed.

In some implementations, computer readable instructions 704 can include transistor array and/or other integrated circuit (IC) components. For example, configurable firmware logic and/or fixed-functionality hardware logic implementations of the computer readable instructions 704 can include configurable computer readable instructions such as, for example, programmable logic arrays (PLAs), field programmable gate arrays (FPGAs), complex programmable logic devices (CPLDs), or fixed-functionality computer readable instructions (e.g., hardware) using circuit technology such as, for example, application specific integrated circuit (ASIC), complementary metal oxide semiconductor (CMOS) or transistor-transistor logic (TTL) technology, the like, and/or combinations thereof.

### Additional Notes and Examples:

Clause 1 is a computing system comprising a processor; and a memory coupled to the processor. The memory including a set of instructions, which when executed by the processor, cause the processor to: loop through a plurality of airplane system alert types; determine an alert rule associated with individual airplane system alert types, wherein the alert rule has an alert threshold associated with a category type; scan an airplane log datastore for error events associated with the alert rule; group the error events based at least in part on the category type; determine whether a group of error events meets the alert threshold; and ignore the group of error events in response to the alert threshold not being met.

Clause 2 includes the computing system of Clause 1, wherein the alert threshold has an upper alert threshold value and a lower alert threshold value.

Clause 3 includes the computing system of any one of Clauses 1 to 2, wherein the category type is one or more of occurrences per flight or occurrences per time period.

Clause 4 includes the computing system of any one of Clauses 1 to 3, wherein the instructions, when executed, further cause the processor to: create a hash value of the group of events in response to the alert threshold being met; determine if the hash value matches a previous hash value of a previous event that already exists in the airplane log datastore; and ignore the group of error events in response to the hash value matching the previous hash value.

Clause 5 includes the computing system of any one of Clauses 1 to 4, wherein the instructions, when executed, further cause the processor to: create a hash value of the group of events in response to the alert threshold being met; determine if the hash value matches a previous hash value of a previous event that already exists in the airplane log datastore; send an alert to an end user in response to the hash value not matching the previous hash value; and store the hash value in the airplane log datastore in response to the hash value not matching the previous hash value.

Clause 6 includes the computing system of any one of Clauses 1 to 5, wherein the instructions, when executed, further cause the processor to: download airplane log file associated with an individual airplane; determine airplane configuration associated the individual airplane; establish a dictionary lookup rule based on the airplane configuration, wherein the dictionary lookup rule identifies operational error types; determine whether the error events have occurred in the airplane log file based on the dictionary lookup rule; extract error data from the airplane log file based on the error events; determine whether a portion of the error events exceed a time threshold based on the error data; remove the portion of the error events that exceed the time threshold; and export the portion of the error events that do not exceed the time threshold.

Clause 7 includes the computing system of any one of Clauses 1 to 6, wherein the error data is one or more of time of error, time of error event, type of error event, system involved in the error event, flight number, specific airplane, location of airplane at time of error, airplane hardware configuration, airplane software configuration, plane number, or plane configuration.

Clause 8 is at least one computer readable storage medium comprising a set of instructions, which when executed by a computing system, cause the computing system to: loop through a plurality of airplane system alert types; determine an alert rule associated with individual airplane system alert types, wherein the alert rule has an alert threshold associated with a category type; scan an airplane log datastore for error events associated with the alert rule; group the error events based at least in part on the category type; determine whether a group of error events meets the alert threshold; and ignore the group of error events in response to the alert threshold not being met.

Clause 9 includes the at least one computer readable storage medium of Clause 8, wherein the alert threshold has an upper alert threshold value and a lower alert threshold value.

Clause 10 includes the at least one computer readable storage medium of any one of Clauses 8 to 9, wherein the category type is one or more of occurrences per flight or occurrences per time period.

Clause 11 includes the at least one computer readable storage medium of any one of Clauses 8 to 10, wherein the instructions, when executed, further cause the computing system to: create a hash value of the group of events in response to the alert threshold being met; determine if the hash value matches a previous hash value of a previous event that already exists in the airplane log datastore; and ignore the group of error events in response to the hash value matching the previous hash value.

Clause 12 includes the at least one computer readable storage medium of any one of Clauses 8 to 11, wherein the instructions, when executed, further cause the computing system to: create a hash value of the group of events in response to the alert threshold being met; determine if the hash value matches a previous hash value of a previous event that already exists in the airplane log datastore; send an alert to an end user in response to the hash value not matching the previous hash value; and store the hash value in the airplane log datastore in response to the hash value not matching the previous hash value.

Clause 13 includes the at least one computer readable storage medium of any one of Clauses 8 to 12, wherein the instructions, when executed, further cause the computing system to: download airplane log file associated with an individual airplane; determine airplane configuration associated the individual airplane; establish a dictionary lookup rule based on the airplane configuration, wherein the dictionary lookup rule identifies operational error types; determine whether the error events have occurred in the airplane log file based on the dictionary lookup rule; extract error data from the airplane log file based on the error events; determine whether a portion of the error events exceed a time threshold based on the error data; remove the portion of the error events that exceed the time threshold; and export the portion of the error events that do not exceed the time threshold.

Clause 14 includes the at least one computer readable storage medium of any one of Clauses 8 to 13, wherein the error data is one or more of time of error, time of error event, type of error event, system involved in the error event, flight number, specific airplane, location of airplane at time of error, airplane hardware configuration, airplane software configuration, plane number, or plane configuration.

Clause 15 is a method, such as a computer-implemented method, comprising: looping through a plurality of airplane system alert types; determining an alert rule associated with individual airplane system alert types, wherein the alert rule has an alert threshold associated with a category type; scanning an airplane log datastore for error events associated with the alert rule; grouping the error events based at least in part on the category type; determining whether a group of error events meets the alert threshold; and ignoring the group of error events in response to the alert threshold not being met.

Clause 16 includes the method of Clause 15, wherein the alert threshold has an upper alert threshold value and a lower alert threshold value.

Clause 17 includes the method of any one of Clauses 15 to 16, wherein the category type is one or more of occurrences per flight or occurrences per time period.

Clause 18 includes the method of any one of Clauses 15 to 17, further comprising: creating a hash value of the group of events in response to the alert threshold being met; determining if the hash value matches a previous hash value of a previous event that already exists in the airplane log datastore; and ignoring the group of error events in response to the hash value matching the previous hash value.

Clause 19 includes the method of any one of Clauses 15 to 18, further comprising: creating a hash value of the group of events in response to the alert threshold being met; determining if the hash value matches a previous hash value of a previous event that already exists in the airplane log datastore; sending an alert to an end user in response to the hash value not matching the previous hash value; and storing the hash value in the airplane log datastore in response to the hash value not matching the previous hash value.

Clause 20 includes the method of any one of Clauses 15 to 19, further comprising: downloading airplane log file associated with an individual airplane; determining airplane configuration associated the individual airplane; establishing a dictionary lookup rule based on the airplane configuration, wherein the dictionary lookup rule identifies operational error types; determining whether the error events have occurred in the airplane log file based on the dictionary lookup rule; extracting error data from the airplane log file based on the error events; determining whether a portion of the error events exceed a time threshold based on the error data; removing the portion of the error events that exceed the time threshold; and exporting the portion of the error events that do not exceed the time threshold.

Clause 21 includes a machine-readable storage including machine-readable instructions, which when executed, implement a method or realize an apparatus as claimed in any preceding Clause.

Clause 22 includes an apparatus including means for performing the function of any preceding Clause.

All definitions, as defined and used herein, should be understood to control over dictionary definitions, definitions in documents incorporated by reference, and/or ordinary meanings of the defined terms.

Furthermore, for ease of understanding, certain functional blocks can have been delineated as separate blocks; however, these separately delineated blocks should not necessarily be construed as being in the order in which they are discussed or otherwise presented herein. For example, some blocks can be able to be performed in an alternative ordering, simultaneously, etc.

The terms "coupled," "attached," or "connected" can be used herein to refer to any type of relationship, direct or indirect, between the components in question, and can apply to electrical, mechanical, fluid, optical, electromagnetic, electro-mechanical or other connections. Additionally, the terms "first," "second," etc. are used herein only to facilitate discussion, and carry no particular temporal or chronological significance unless otherwise indicated. The terms "cause" or "causing" means to make, force, compel, direct, command, instruct, and/or enable an event or action to occur or at least be in a state where such event or action can occur, either in a direct or indirect manner.

Although a number of illustrative examples are described herein, it should be understood that numerous other modifications and examples can be devised by those skilled in the art that will fall within the scope of the claims . More particularly, reasonable variations and modifications are possible in the component parts and/or arrangements of the subject combination arrangement within the scope of the foregoing disclosure, the drawings and the appended claims without departing from the foregoing disclosure. In addition to variations and modifications in the component parts and/or arrangements, alternative uses will also be apparent to those skilled in the art. The examples can be combined to form additional examples.

## Claims

1. A computing system comprising:
a processor (602); and
a memory (604) coupled to the processor (602), the memory (604) including a set of instructions (606), which when executed by the processor (602), cause the processor to:
loop through a plurality of airplane system alert types (302);
determine an alert rule associated with individual airplane system alert types (304), wherein the alert rule has an alert threshold associated with a category type;
scan an airplane log datastore (220) for error events associated with the alert rule;
group the error events based at least in part on the category type (308);
determine whether a group of error events meets the alert threshold (310); and
ignore the group of error events in response to the alert threshold not being met (312).

2. The computing system of claim 1, wherein:
the alert threshold has an upper alert threshold value and a lower alert threshold value; and/or
the category type is one or more of occurrences per flight or occurrences per time period.

3. The computing system of claim 1 or 2, wherein the instructions (606), when executed, further cause the processor to:
create a hash value of the group of events in response to the alert threshold being met (434);
determine if the hash value matches a previous hash value of a previous event (436) that already exists in the airplane log datastore (220); and
ignore the group of error events in response to the hash value matching the previous hash value (438).

4. The computing system of any one of claims 1 - 3, wherein the instructions (606), when executed, further cause the processor to:
create a hash value of the group of events in response to the alert threshold being met (434);
determine if the hash value matches a previous hash value of a previous event (436) that already exists in the airplane log datastore (220);
send an alert to an end user in response to the hash value not matching the previous hash value (440); and
store the hash value in the airplane log datastore (220) in response to the hash value not matching the previous hash value (442).

5. The computing system of any one of claims 1 - 4, wherein the instructions (606), when executed, further cause the processor to:
download airplane log file (402) associated with an individual airplane;
determine airplane configuration (404) associated the individual airplane;
establish a dictionary lookup rule (406) based on the airplane configuration, wherein the dictionary lookup rule identifies operational error types;
determine whether the error events have occurred in the airplane log file based on the dictionary lookup rule (410);
extract error data from the airplane log file based on the error events (414);
determine whether a portion of the error events exceed a time threshold based on the error data (416);
remove the portion of the error events that exceed the time threshold (418); and
export the portion of the error events that do not exceed the time threshold (420), preferably wherein:
the error data is one or more of time of error, flight number, plane number, or plane configuration.

6. At least one computer readable storage medium comprising a set of instructions (504), which when executed by a computing system, cause the computing system to:
loop through a plurality of airplane system alert types (302);
determine an alert rule associated with individual airplane system alert types (304), wherein the alert rule has an alert threshold associated with a category type;
scan an airplane log datastore (306) for error events associated with the alert rule;
group the error events based at least in part on the category type (308);
determine whether a group of error events meets the alert threshold (310); and
ignore the group of error events in response to the alert threshold not being met (312).

7. The at least one computer readable storage medium of claim 6, wherein:
the alert threshold has an upper alert threshold value and a lower alert threshold value; and/or
the category type is one or more of occurrences per flight or occurrences per time period.

8. The at least one computer readable storage medium of any one of claims 6 - 7, wherein the instructions, when executed, further cause the computing system to:
create a hash value of the group of events in response to the alert threshold being met (434);
determine if the hash value matches a previous hash value of a previous event (436) that already exists in the airplane log datastore (220); and
ignore the group of error events in response to the hash value matching the previous hash value.

9. The at least one computer readable storage medium of any one of claims 6 - 8, wherein the instructions, when executed, further cause the computing system to:
create a hash value of the group of events in response to the alert threshold being met (434);
determine if the hash value matches a previous hash value of a previous event (436) that already exists in the airplane log datastore (220);
send an alert to an end user in response to the hash value not matching the previous hash value (440); and
store the hash value in the airplane log datastore (220) in response to the hash value not matching the previous hash value (442).

10. The at least one computer readable storage medium of any one of claims 6 - 9, wherein the instructions, when executed, further cause the computing system to:
download airplane log file (402) associated with an individual airplane;
determine airplane configuration (404) associated the individual airplane;
establish a dictionary lookup rule (406) based on the airplane configuration, wherein the dictionary lookup rule identifies operational error types;
determine whether the error events have occurred in the airplane log file based on the dictionary lookup rule (410);
extract error data from the airplane log file based on the error events (414);
determine whether a portion of the error events exceed a time threshold based on the error data (416);
remove the portion of the error events that exceed the time threshold (418); and
export the portion of the error events that do not exceed the time threshold (420), preferably wherein:
the error data is one or more of time of error, flight number, plane number, or plane configuration.

11. A method (300) comprising:
looping through a plurality of airplane system alert types (302);
determining an alert rule associated with individual airplane system alert types (304), wherein the alert rule has an alert threshold associated with a category type;
scanning an airplane log datastore (306) for error events associated with the alert rule;
grouping the error events based at least in part on the category type (308);
determining whether a group of error events meets the alert threshold (310); and
ignoring the group of error events in response to the alert threshold not being met (312).

12. The method of claim 11, wherein:
the alert threshold has an upper alert threshold value and a lower alert threshold value; and/or
the category type is one or more of occurrences per flight or occurrences per time period.

13. The method (300) of any one of claims 11 - 12, further comprising:
creating a hash value of the group of events in response to the alert threshold being met (434);
determining if the hash value matches a previous hash value of a previous event (436) that already exists in the airplane log datastore (220); and
ignoring the group of error events in response to the hash value matching the previous hash value (312).

14. The method (300) of any one of claims 11 - 13, further comprising:
creating a hash value of the group of events in response to the alert threshold being met (434);
determining if the hash value matches a previous hash value of a previous event (436) that already exists in the airplane log datastore (220);
sending an alert to an end user in response to the hash value not matching the previous hash value (440); and
storing the hash value in the airplane log datastore (220) in response to the hash value not matching the previous hash value (442).

15. The method of any one of claims 11 - 14, further comprising:
downloading airplane log file (402) associated with an individual airplane;
determining airplane configuration (404) associated the individual airplane;
establishing a dictionary lookup rule (406) based on the airplane configuration, wherein the dictionary lookup rule identifies operational error types;
determining whether the error events have occurred in the airplane log file based on the dictionary lookup rule (410);
extracting error data from the airplane log file based on the error events (414);
determining whether a portion of the error events exceed a time threshold based on the error data (416);
removing the portion of the error events that exceed the time threshold (418); and
exporting the portion of the error events that do not exceed the time threshold (420).
